# EUROPÄISCHE PATENTANMELDUNG

(11) **EP 1 293 654 A2**
(43) Veröffentlichungstag der Anmeldung: **19.03.2003**
(21) Anmeldenummer: 02021233.8
(22) Anmeldetag: 18.09.2002
(51) Int. Cl.: F02B 69/02, F02M 63/02, F02M 37/00, F02M 43/00

(54) **Kraftstoff-Einspritzsystem für Brennkraftmaschinen**

(30) Priorität: 18.09.2001 DE 10146051; 10.07.2002 DE 10230958; 17.06.2002 DE 20209413 U
(71) Anmelder: Winkelmann, Karlheinrich, 33617 Bielefeld (DE)
(72) Erfinder: Winkelmann, Karlheinrich, 33617 Bielefeld (DE)
(74) Vertreter: TER MEER STEINMEISTER & PARTNER GbR

(57) **Zusammenfassung**

Die vorliegende Erfindung betrifft ein Kraftstoff-Einspritzsystem (10) für Brennkraftmaschinen, mit einer Einspritzpumpe (14) zum Einspritzen von flüssigem Kraftstoff in den Brennraum der Brennkraftmaschine, einem Tank (20) zur Speicherung eines Mitteldruckkraftstoffs, dessen Dampfdruck höher ist als der Atmosphärendruck, welcher Tank (20) mit einem Druck beaufschlagt ist, der höher ist als der Dampfdruck des Mitteldruckkraftstoffs, und einer innerhalb des Tanks (20) angeordneten ersten Kraftstoffpumpe (24) zum Fördern von Kraftstoff durch eine Einspritzpumpen-Zuleitung zur Einspritzpumpe (14). Das erfindungsgemäße Kraftstoff-Einspritzsystem (10) ist dadurch gekennzeichnet, daß in der Einspritzpumpen-Zuleitung stromabwärts der ersten Kraftstoffpumpe (24) außerhalb des Tanks (20) eine zweite Kraftstoffpumpe (30) zur zusätzlichen Druckbeaufschlagung des Kraftstoffs angeordnet ist.

## Beschreibung

Die Erfindung betrifft ein Kraftstoff-Einspritzsystem für Brennkraftmaschinen gemäß dem Oberbegriff des Anspruchs 1.

Einspritzsysteme, welche den Kraftstoff in flüssiger Form unmittelbar in den Brennraum einer Brennkraftmaschine einspritzen, sind seit längerer Zeit bekannt und werden beispielsweise im Zusammenhang mit der Common-Rail-Technologie verwendet. Durch die Direkteinspritzung läßt sich eine hohe Leistungsausbeute erzielen, während gleichzeitig der Kraftstoffverbrauch relativ gering ist. Aus diesen Gründen hat diese Technik bereits weite Verbreitung beim Bau von Kraftfahrzeug-Motoren gefunden.

Seit einiger Zeit besteht das Bedürfnis, neben den bisher üblichen flüssigen Kraftstoffen wie Benzin oder Diesel weitere Kraftstoffquellen zu erschließen. Zum Betrieb von Fahrzeugmotoren kommt insbesondere Flüssiggas in Betracht, das als Nebenprodukt bei der Herstellung von Benzin und Diesel anfällt. Es läßt sich mit guter Leistungsausbeute zum Betrieb von Verbrennungsmotoren verwenden und führt zu geringeren Umweltemissionen. Üblicherweise handelt es sich hierbei um ein Propan-Butan-Gemisch, welches auch als LPG (Liquified-Petroleum-Gas) bezeichnet wird. Unter Atmosphärendruck ist dieser Kraftstoff gasförmig, läßt sich jedoch durch Beaufschlagung eines relativ geringen Überdrucks von ca. 6 bar im flüssigen Aggregatzustand halten. Diese Art von Kraftstoff soll daher im folgenden als Mitteldruckkraftstoff bezeichnet werden, in Abgrenzung zu den bei Atmosphärendruck flüssigen Niederdruckkraftstoffen wie Benzin oder Diesel. Grundsätzlich läßt sich auch Mitteldruckkraftstoff in dem oben beschriebenen Direkteinspritzsystem verwenden, vorausgesetzt, daß der Kraftstoff unter Druck und somit flüssig gehalten wird und in diesem Zustand in die Brennkammer eingespritzt werden kann.

Geeignete Kraftstoff-Einspritzsysteme sind bereits in unterschiedlichen Varianten bekannt. Beispielsweise zeigt die Druckschrift EP 0 725 208 B1 ein Einspritzsystem, bei welchem Flüssiggas aus einem mit Druck beaufschlagten Speichertank in flüssiger Form der Einspritzpumpe zugeführt wird. Zu diesem Zweck ist innerhalb des Tanks eine Kraftstoffpumpe angeordnet, die das Flüssiggas in die Einspritzpumpen-Zuleitung fördert. Auch die US-A 5 291 869 offenbart ein Flüssiggas-Einspritzsystem mit einer im Tank angeordneten Pumpe.

Diese Aufbauten bietet den Vorteil, daß sie konstruktiv einfach und preiswert sind.

Bei diesen Systemen tritt jedoch häufig das Problem auf, daß das in flüssiger Form aus dem Tank beförderte Gas sich aufgrund seines niedrigen Dampfdrucks auf dem Weg zur Einspritzpumpe erwärmt und verdampft. Dies ist jedoch höchst unerwünscht, da sich die volle Leistungsausbeute der Brennkraftmaschine nur dann erreichen läßt, wenn der Kraftstoff in flüssiger Form eingespritzt werden kann. Aus diesem Grund schlägt beispielsweise die erwähnte USA 5 291 869 ein Kühlsystem vor, durch welches der Kraftstoff unmittelbar vor dem Einspritzen gekühlt wird, so daß er im flüssigen Aggregatzustand verbleibt.

Damit die Verflüssigung durch ein solches Kühlsystem effektiv durchgeführt werden kann, ist eine relativ aurwendige Konstruktion erforderlich, damit eine ausreichende Kühlleistung zur Verfügung gestellt werden kann. Insbesondere muß die Einspritzpumpe selbst stark modifiziert werden. Es kommt daher grundsätzlich die alternative Möglichkeit in Betracht, den Mitteldruckkraftstoff durch die Pumpe im Tank mit einem Druck zu beaufschlagen, der ausreichend ist, um den Kraftstoff über die gesamte Einspritzpumpen-Zuleitung hinweg flüssig zu halten. Da der erzeugte Druck sehr hoch sein muß, ist eine hohe Pumpenleistung erforderlich. Die Anbringung einer derart leistungsfähigen Pumpe in einem Flüssiggas-Tank führt jedoch aus Platzgründen und aufgrund ihrer höheren Betriebstemperatur zu weiteren Problemen bei der Konstruktion und beim Betrieb des Einspritzsystems. Bei vergleichsweise langen Einspritzpumpen-Zuleitungen sind die Einsatzmöglichkeiten dieses Aufbaus jedoch begrenzt, da der aufzubringende Druck mit der Leitungslänge ansteigt. Zudem muß das gesamte Leitungssystem so druckfest ausgelegt sein, daß es dem gegenüber den herkömmlichen Systemen höheren Betriebsdruck standhält.

Aufgabe der vorliegenden Erfindung ist es daher, ein Kraftstoff-Einspritzsystem der eingangs genannten Art zu schaffen, durch welches sich Mitteldruckkraftstoff in flüssiger Form der Einspritzpumpe zuführen läßt, ohne daß der konstruktive Aufwand gegenüber den bekannten Systemen wesentlich ansteigt und ohne daß Probleme beim Betrieb auftreten.

Diese Aufgabe wird erfindungsgemäß durch ein Kraftstoff-Einspritzsystem mit den Merkmalen des Anspruchs 1 gelöst.

Bei dem erfindungsgemäßen Kraftstoff-Einspritzsystem ist zusätzlich zu der im Tank angeordneten Kraftstoffpumpe eine weitere, zweite Kraftstoffpumpe stromabwärts in der Einspritzpumpen-Zuleitung außerhalb des Tanks angeordnet. Diese beiden Pumpen sind also in Reihe geschaltet, so daß sich die von ihnen erzeugten Drücke addieren. Die Pumpe im Tank sorgt dafür, daß der Mitteldruckkraftstoff den Tank in flüssiger Form verläßt und auch noch in diesem Zustand die zweite Pumpe erreicht. Diese beugt dann durch die zusätzliche Druckbeaufschlagung einem weiteren Druckabfall vor, so daß gewährleistet wird, daß der Einspritzpumpe stets nur flüssiger Kraftstoff zugeführt wird.

Diese Konstruktion ist insofern relativ einfach, als daß keine Veränderung der Einspritzpumpe notwendig ist, sondern lediglich eine Flüssigkraftstoff-Pumpe zusätzlich in die Einspritzpumpen-Zuleitung eingebaut werden muß. Die Leistung der Pumpe im Tank kann so weit begrenzt sein, daß sie gerade ausreicht, um den Kraftstoff bis zum Erreichen der zweiten Pumpe flüssig zu halten. Zu diesem Zweck genügt auch eine klein dimensionierte Kraftstoffpumpe, so daß es keine Probleme bei der Unterbringung und in Bezug auf die Abwärme gibt. Schließlich kann der Teil der Einspritzpumpen-Zuleitung zwischen der ersten und der zweiten Kraftstoffpumpe auf einen vergleichsweise niedrigen Nenndruck ausgelegt sein, unabhängig von dem höheren Enddruck, der durch die zweite Pumpe erzeugt wird.

Vorzugsweise handelt es sich bei dem Mitteldruckkraftstoff um Flüssiggas (LPG). In bevorzugten Ausführungsformen umfaßt das erfindungsgemäße Kraftstoff-Einspritzsystem ein Hochdruckventil zur Steuerung des Einspritzdruckes der Einspritzpumpe sowie ein Drucksteuerventil zur Steuerung des Druckes in der Einspritzpumpen-Zuleitung.

In einer weiteren bevorzugten Ausführungsform mündet in die Einspritzpumpen-Zuleitung eine Niederdruckkraftstoff-Zuleitung zum Einspeisen eines unter Atmosphärendruck flüssigen Niederdruckkraftstoffs aus einer Niederdruckkraftstoff-Quelle, und die Niederdruckkraftstoff-Zuleitung und die Einspritzpumpen-Zuleitung umfassen Einrichtungen zum Umschalten zwischen einer Kraftstoffzufuhr aus der Niederdruckkraftstoff-Quelle und einer Kraftstoffzufuhr aus dem Tank.

Bei dieser Ausführungsform handelt es sich um ein sogenanntes bivalentes System, das sowohl mit Niederdruck-Kraftstoff als auch mit Mitteldruckkraftstoff zu betreiben ist und aufgrund dieser Wahlmöglichkeit besonders flexibel einsetzbar ist. Hierbei ist die Einspritzpumpe dazu vorgesehen, entweder Niederdruckkraftstoff wie etwa Benzin oder Diesel oder flüssigen Mitteldruckkraftstoff in den Brennraum der Brennkraftmaschine einzuspritzen, ohne daß Modifikationen oder Ergänzugen der Einspritzpumpe gegenüber einem herkömmlichen Niederdruckkraftstoff-System erfoderlich sind. Durch entsprechende Umschalteinrichtungen ist eine Wahl zwischen den beiden Betriebsarten möglich. Diese können insbesondere dazu dienen, mit unterschiedlichen Drücken beaufschlagte Teile des Systems voneinander zu trennen und beispielsweise zu verhindern, daß der zur Einspeisung von Niederdruckkraftstoff dienende Systembereich mit dem Druck beaufschlagt wird, der in dem Systembereich herrscht, aus welchen der Mitteldruckkraftstoff eingespeist wird. Im umgekehrten Fall ist zu verhindern, daß der Druck in der Mitteldruckkraftstoff-Zufuhr so weit abfällt, daß es in der Kraftstoffleitung zu dem unerwünschten Verdampfen des Mitteldruckkraftstoffs kommt.

Vorzugsweise mündet die Niederdruckkraftstoff-Zuleitung an einem Punkt stromabwärts der zweiten Kraftstoffpumpe in die Einspritzpumpen-Zuleitung, so daß beide oben erwähnten Kraftstoffpumpen dazu dienen, lediglich die Mitteldruckkraftstoff-Komponente zu fördern und mit Druck zu beaufschlagen. Die Umschalt-Einrichtungen umfassen bevorzugt Magnetventile zum Zu- oder Abschalten der Kraftstoffzufuhr aus dem Tank oder der Niederdruckkraftstoff-Quelle.

In einer bevorzugten Ausführungsform ist in der Niederdruckkraftstoff-Zuleitung eine Niederdruckkraftstoff-Pumpe angeordnet, die den Niederdruckkraftstoff selbständig in die Einspritzpumpen-Zuleitung befördern kann. Die Niederdruckkraftstoff-Pumpe und die in Serie geschalteten Mitteldruckkraftstoff-Pumpen sind unabhängig voneinander betreibbar. Dies erweist sich zur Kontrolle der Druckverhältnisse bei Umschaltvorgängen als vorteilhaft. Wird beispielsweise von Mitteldruckkraftstoff auf Niederdruckkraftstoff umgeschaltet, so ist es möglich, die Mitteldruckkraftstoff-Pumpen abzuschalten, während die Niederdruckkraftstoff-Pumpe den Druck in der Einspritzpumpen-Zuleitung aufrechterhält. Die in der Zuleitung verbleibenden Mitteldruckkraftstoff-Reste werden dadurch am Verdampfen gehindert und können der Einspritzpumpe in flüssiger Form zugeführt werden, während sie allmählich vom Niederdruckkraftstoff verdrängt werden. Dies trägt dazu bei, das Auftreten unerwünschter gasförmiger Kraftstoff-Komponenten bei Umschaltvorgängen vollständig zu verhindern, so daß keine Betriebs- oder Leistungsstörungen auftreten und eine kontinuierliche Verbrennung möglich ist.

Weitere vorteilhafte Ausgestaltungen der Erfindung ergeben sich aus den übrigen Unteransprüchen.

Im folgenden werden bevorzugte Ausführungsbeispiele der Erfindung anhand der Zeichnung näher erläutert.
- Fig. 1: ist ein Schaltbild eines ersten Ausführungsbeispiels eines erfindungsgemäßen Kraftstoff-Einspritzsystems;
- Fig. 2: ist ein Schaltbild eines zweiten Ausführungsbeispiels eines erfindungsgemäßen Kraftstoff-Einspritzsystems; und
- Fig. 3: ist ein Schaltbild entsprechend Figur 2 einer zweiten Ausführungsform eines erfindungsgemäßen Kraftstoff-Einspritzsystems.

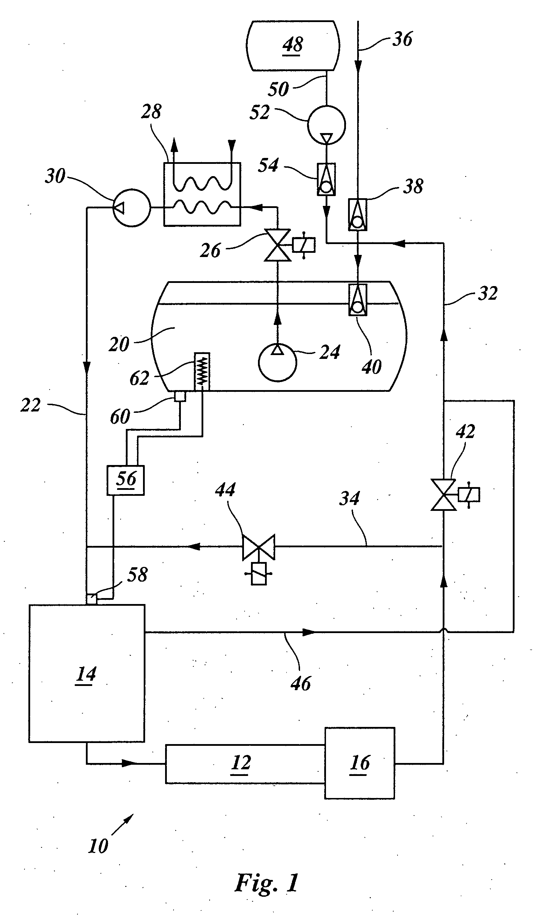

Bei dem in Fig. 1 dargestellten Kraftstoff-Einspritzsystem 10 handelt es sich um ein Einspritzsystem, das zum Betrieb mit einem Mitteldruckkraftstoff geeignet ist, der unter Atmosphärendruck gasförmig ist und zur Verflüssigung mit einem Druck von zumindest etwa 6 bar beaufschlagt werden muß. Hierbei kann es sich insbesondere um Flüssiggas handeln, welches auch als LPG (Liquified Petroleum Gas) bezeichnet wird und ein Propan-Butan-Gemisch ist.

Das Einspritzssystem 10 ist nach dem Common-Rail-Prinzip aufgebaut, d.h., durch ein in Figur 1 nur schematisch dargestelltes Verteilerrohr 12 wird der nicht gezeigte Brennraum eines Motors mit Kraftstoff versorgt. Dies geschieht unter hohem Druck durch eine Einspritzpumpe 14, die den mit Druck beaufschlagtem Kraftstoff in das Verteilerrohr eingespeist. Über einen Hochdruckregler 16, der an das Verteilerrohr 12 angeschlossen ist, kann überschüssiger, nicht dem Brennraum zugeführter Kraftstoff abgeleitet werden. Gleichzeitig dient der Hochdruckregler 16 dazu, den Druck im Verteilerrohr 12 zu regeln.

In einem Tank 20 ist Mitteldruckkraftstoff unter einem Druck gespeichert, der höher ist als der Verdampfungsdruck des Mitteldruckkraftstoffs. Beispielsweise beträgt der Druck innerhalb des Tanks 20 25 bar, während der Abblasdruck der Tanks 20 bei 30 bar liegt. Der Mitteldruckkraftstoff wird der Einspritzpumpe 14 durch eine Einspritzpumpen-Zuleitung 22 auf die im folgenden erläuterte Weise zugeführt.

Innerhalb des Tanks ist eine erste Kraftstoffpumpe 24 angeordnet, die den flüssig gehaltenen Mitteldruckkraftstoff in die Einspritzpumpen-Zuleitung 22 einspeist. Im vorliegenden Fall handelt es sich um eine Tauchpumpe. Die Kraftstoffpumpe 24 kann ferner von der Decke des Tanks 20 abgehängt sein. Der Mitteldruckkraftstoff passiert in dem außerhalb des Tanks 20 verlaufenden Abschnitt der Einspritzpumpen-Zuleitung 22 nacheinander ein Magnetventil 26, einen Wärmetauscher 28 und eine zweite Kraftstoffpumpe 30. Die beiden Kraftstoffpumpen 24, 30 sind somit hintereinander geschaltet, so daß sich ihre Drükke addieren. Die Leistung der ersten Kraftstoffpumpe 24 ist so bemessen, daß sie den Mitteldruckkraftstoff mit einem Druck zu beaufschlagt, der ausreichend ist, um den Mitteldruckkraftstoff auf seinem Weg bis zur zweiten Kraftstoffpumpe 30 flüssig zu halten. Dies wird durch die Kühlleistung des Wärmetauschers 28 unterstützt, welcher durch die Verdampfungskälte von Mitteldruckkraftstoff betrieben werden kann, der auf hier nicht dargestellte Weise aus dem Tank 20 abgezweigt wird. Wahlweise ist es möglich, als Kühlmittel des Wärmetauschers 28 das Kältemittel einer Klimaanlage des Fahrzeugs zu verwenden.

Die zweite Kraftstoffpumpe 30 beaufschlagt den Mitteldruckkraftstoff mit einem zusätzlichen Druck, der ausreicht, um der Kraftstoff der Einspritzpumpe 14 in flüssiger Form zuzuführen. Das Magnetventil 26 dient dazu, die Kraftstoffzufuhr gegebenenfalls vollständig abzuschalten und somit den Betrieb der Brennkraftmaschine zu unterbrechen.

Durch die serielle Anordnung der Kraftstoffpumpen 24, 30 läßt sich gewährleisten, daß stets nur flüssiger Mitteldruckkraftstoff zur Einspritzpumpe 14 gelangt. Da dieser nun in flüssiger Form in den Brennraum eingespritzt wird, wird keine Ansaugluft mehr verdrängt. Dadurch erhöht sich der Füllungsgrad der Zylinder im Vergleich zur Einspritzung in den Ansaugtrakt und damit auch die Leistung des Motors.

Eine Rücklaufleitung 32 dient dazu, überschüssigen, nicht in den Brennraum eingespritzten Kraftstoff vom Hochdruckregler 16 wahlweise in die Einspritzpumpen-Zuleitung 22 oder in den Tank 20 zurückzuführen. Zu diesem Zweck ist die Rücklaufleitung 32 einerseits über eine Querverbindung 34 mit der Einspritzpumpen-Zuleitung 22 verbunden und mündet andererseits selbst in eine Fülleitung 36, die zum Befüllen des Tanks 20 dient und in diesen hineinführt. Über die Fülleitung 36 kann ferner Mitteldruckkraftstoff aus einer nicht dargestellten Mitteldruckkraftstoff-Quelle in den Tank gefüllt werden. Um einen Rückstrom zur Mitteldruckkraftstoff-Quelle zu verhindern, ist in der Fülleitung 36 ein Rückschlagventil 38 angeordnet. Ein weiteres Rückschlagventil 40 am Einlaß zum Tank 20 sorgt dafür, daß der Druck im Tank 20 aufrecht erhalten bleibt. Ferner sind in der Rücklaufleitung 32 und in der Querverbindung 34 Magnetventile 42, 44 angeordnet, durch welche sich der Durchfluß steuern läßt. Eine weitere Rücklaufleitung 46 führt Kraftstoff von der Einspritzpumpe 14 in die Rücklaufleitung 32. Schließlich besteht die Möglichkeit, aus einem Schmiermittel-Tank 48 ein Schmiermittel über die Fülleitung 36 in den Tank 20 einzuspeisen und dieses somit unter den Mitteldruckkraftstoff zu mischen, welches die Betriebseigenschaften des Kraftstoffs verbessern kann. Hierzu ist der Schmiermittel-Tank 48 über eine entsprechende Zuleitung 50 mit einer Schmiermittel-Pumpe 52 und einem Rückschlagventil 54 zur Verhinderung eines Rückstroms mit der Fülleitung 36 verbunden.

Die vorliegende Anordnung bietet ferner Möglichkeiten zur Temperatur- und Drucksteuerung. Zu diesem Zweck ist eine elektrische Steuereinheit 56 vorgesehen, die mit zwei Temperaturfühlern verbunden ist, nämlich einem ersten Temperaturfühler 58 in der Einspritzpumpen-Zuleitung am Eingang der Einspritzpumpe 14 und einem zweiten Temperaturfühler 60 zur Messung der Temperatur innerhalb des Tanks 20. Die Steuereinheit 56 ist somit in der Lage, die Temperatur im Tank 20 mit derjenigen in der Einspritzpumpen-Zuleitung 22 unmittelbar vor der Einspritzpumpe 14 zu vergleichen. Außerdem befindet sich im Tank 20 eine elektrische Heizung 62, die durch die elektrische Steuereinheit 46 gesteuert werden kann. Alternativ können an der Außenseite des Tanks 20 Heizmatten angebracht sein, oder es wird die Kühlflüssigkeit des Kühlers der Brennkraftmaschine, die durch deren Abwärme erhitzt ist, zum Heizen verwendet. Zur Umgebung hin kann der Tank 20 wärmeisoliert sein und/oder eine Schallisolation aufweisen.

Der Vergleich der Temperaturen im Tank 20 und in der Einspritzpumpen-Zuleitung 22 bietet im Zusammenhang mit der elektrischen Heizung 62 die Möglichkeit. Temperaturschwankungen im System besser abzufangen. Insbesondere ist es notwendig, Temperaturspitzen auszugleichen, die durch Wärmeleitung innerhalb des Systems und durch die Wärmeabstrahlung der Brennkraftmaschine verursacht werden. Es muß jedoch gewährleistet sein, daß der herrschende Druck des Mitteldruckkraftstoffs am Eingang der Einspritzpumpe 14 immer höher ist als sein Dampfdruck. Die Steuereinheit 56 vergleicht somit die Temperaturen im Tank 20 und am Eingang der Einspritzpumpe 14 und reagiert, falls die Differenz der Meßwerte einen vorgegebenen Wert überschreitet, mit einem Zuschalten der elektrischen Heizung 62. Auf diese Weise kann sichergestellt werden, daß eine bestimmte maximale Temperaturdifferenz nicht überschritten wird. Wird diese unterschritten, so kann die Heizleistung der Heizung 62 abgeschaltet werden.

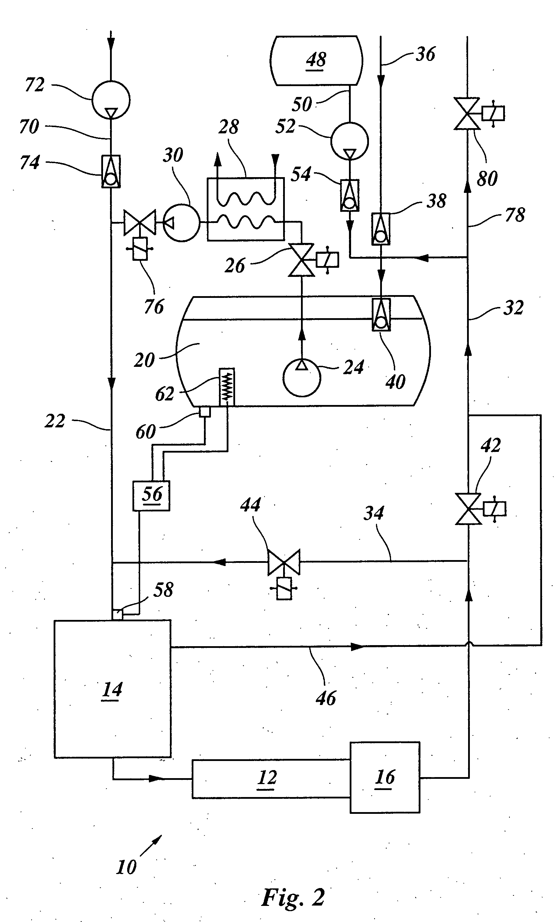

Figur 2 zeigt eine Abwandlung des erfindungsgemäßen Einspritzsystems 10 aus Figur 1. Zur besseren Verständlichkeit sind in den Figuren 1 und 2 gleiche Teile mit identischen Bezugszeichen versehen.

Die Anordnung der Einspritzpumpen-Zuleitung 22 zur Förderung von Mitteldruckkraftstoff aus dem Tank 20 zur Einspritzpumpe 14 entspricht im wesentlichen Figur 1, insbesondere die Anordnung der ersten Kraftstoffpumpe 24 im Tank 20, der nachgeschalteten zweiten Kraftstoffpumpe 30 sowie des dazwischen angeordneten Wärmetauschers 28.

Abweichend von Figur 1 umfaßt die Anordnung aus Figur 2 zusätzlich eine Niederdruckkraftstoff-Zuleitung 70, die an einem Punkt stromabwärts der zweiten Kraftstoffpumpe 30 in die Einspritzpumpen-Zuleitung 22 mündet. Durch diese läßt sich aus einer nicht dargestellten Quelle Niederdruckkraftstoff in die Einspritzpumpen-Zuleitung 22 einspeisen. Bei diesem handelt es sich um einen unter Atmosphärendruck flüssigen Kraftstoff wie etwa Diesel oder Benzin oder gegebenenfalls auch Pflanzenöl. Durch geeignete Zuführungs- und Umschalteinrichtungen, die im folgenden erläutert werden sollen, läßt sich somit wahlweise flüssiger Niederdruckkraftstoff oder Mitteldruckkraftstoff der Einspritzpumpe 14 zuführen.

Die Niederdruckkraftstoff-Zuleitung 70 umfaßt ebenfalls eine Kraftstoffpumpe 72 zum Fördern des Niederdruckkraftstoffs in die Einspritzpumpen-Zuleitung 22. Stromabwärts dieser Niederdruckkraftstoff-Pumpe 72 ist ein Rückschlagventil 74 angeordnet, welches einen Rückstrom entlang der Niederdruckkraftstoff-Zuleitung 70 verhindert. Stromaufwärts der Niederdruckkraftstoff-Pumpe 72 kann auf nicht dargestellte Weise eine Förderpumpe zur Beförderung von Niederdruckkraftstoff aus einem Tank angeordnet sein, so daß die nachgeschaltete Niederdruckkraftstoff-Pumpe 72 vor allem dazu dient, den geförderten Niederdruckkraftstoff mit einem ausreichenden Druck zu beaufschlagen.

Durch welchselweises Betreiben der Kraftstoffpumpen 24 und 30 sowie 72 in den jeweiligen Leitungen 22, 70 sowie durch Öffnen oder Schließen entsprechender Magnetventile läßt sich also wahlweise die eine oder die andere Kraftstoff-Komponente der Einspritzpumpe 14 zuführen. Wird vom Betrieb mit Mitteldruckkraftstoff auf Niederdruckkraftstoff umgeschaltet, so wird ein zwischen der Mitteldruckkraftstoff-Pumpe 30 und der Einmündung der Niederdruckkraftstoff-Zuleitung 70 gelegenes zusätzliches Magnetventil 76 sowie das Magnetventil 26 geschlossen, die Mitteldruckkraftstoff-Pumpen 24, 30 werden abgeschaltet, und die Niederdruckkraftstoff-Pumpe 72 hält das Druckniveau im System aufrecht, damit in den Leitungen 22, 70 verbliebene Reste von Mitteldruckkraftstoff nicht verdampfen können. Auf diese Weise wird ein reibungsloser und störungsfreier Betrieb der Einspritzpumpe 14 gewährleistet, da der Einspritzpumpe 14 stets nur flüssiger Kraftstoff zugeführt wird.

Das Einspritzssystem aus Figur 2 umfaßt ferner ein Kraftstoff-Rückführungssystem entsprechend Figur 1. Ergänzend zweigt von der Rücklaufleitung 32 eine weitere Rücklaufleitung 78 ab, die zur Niederdruckkraftstoff-Quelle führt und durch ein Magnetventil 80 geöffnet oder geschlossen werden kann. Das Kraftstoff-Rückführungssystem aus Figur 2 ermöglicht es insbesondere, Niederdruckkraftstoff in den Mittelsruckkraftstoff-Tank 20 einzuleiten und auf diese weise ein Kraftstoff-Gemisch zu erzeugen, falls dies erwünscht ist. Bezüglich der Funktionen der Temperaturfühler 58, 60 und der Heizung 62 kann auf die Ausführungen im Zusammenhang mit Figur 1 verwiesen werden.

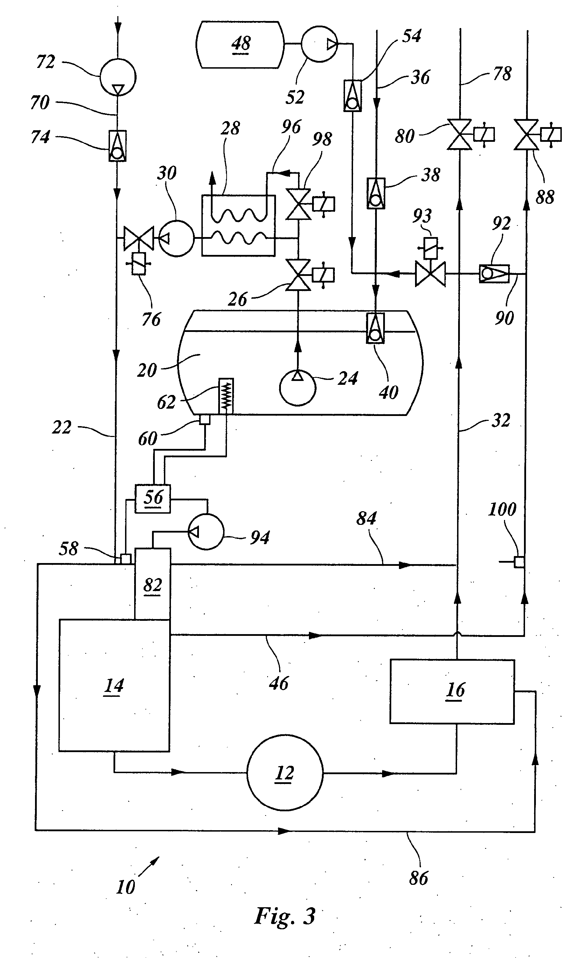

Das Einspritzssystem aus Figur 3 unterscheidet sich von demjenigen in Figur 2 im wesentlichen durch ein verändertes Kraftstoff-Rückführungssystem sowie durch ein Drucksteuerventil 82 zur Steuerung des Eingangsdrucks der Einspritzpumpe 14. Das Drucksteuerventil 82 ist durch eine Steuerleitung 84 mit der Rücklaufleitung 32 verbunden, so daß überschüssiger Kraftstoff in die Rücklaufleitung 32 rückgeführt werden kann. Es gewährleistet, daß stets nur flüssiger Kraftstoff, also insbesondere flüssiger Mitteldruck-Kraftstoff zur Einspritzpumpe 14 gelangt. Eine weitere Steuerleitung 86 zweigt von der Einspritzpumpen-Zuleitung 22 ab und verbindet diese mit dem Hochdruckregler 16. Durch diese Steuerleitung 86 wird ein Steuerkolben des Hochdruckreglers 16 beim Betrieb mit Mitteldruck-Kraftstoff mit einem Druck beaufschlagt, der sich zu einer bereits vorhandenen Federspannung des Kolbens addiert, so daß der gewünschte Einspritzdruck erreicht werden kann.

Die von der Einspritzpumpe 14 ausgehende Rücklaufleitung 46 verläuft in diesem Fall unmittelbar zu der nicht dargestellten Niederdruckkraftstoff-Quelle, wobei der Rücklaufstrom ebenso wie bei der Rücklaufleitung 78 durch ein Magnetventil 88 geregelt ist. Durch eine Zweigleitung 90 mit einem Rückschlagventil 92 ist die Rücklaufleitung 46 mit der Rücklaufleitung 32 und der Fülleitung 36 verbunden, so daß auch von hier aus ein Rücklauf zum Tank 20 möglich ist. Ferner ist in der Rücklaufleitung 32 unmittelbar vor der Einmündung in die Fülleitung 36 ein Magnetventil 93 angeordnet, das eine weitere Möglichkeit zur Steuerung der Kraftstoffstroms bietet. Insbesondere läßt sich durch eine Drosselung des Rücklaufstroms durch das Magnetventil 93 eine Erhöhung des Drucks vor dem Ventil erreichen.

Die vorliegende Anordnung des Steuerventils 82 bietet eine weitere Möglichkeit zur Temperatur- und Drucksteuerung. Zu diesem Zweck ist die elektrische Steuereinheit 56 in der Lage, außer dem beschriebenen Vergleich der Temperaturen im Tank 20 und in der Einspritzpumpen-Zuleitung 22 und der entsprechenden Steuerung der Heizung 62 eine Pumpe 94 anzusteuern, die dazu dient, eine Ausgleichskammer innerhalb des Steuerventils 82 zusätzlich mit Druck zu beaufschlagen. Dieser Druck addiert sich zu einem Federdruck des Steuerventils in der Weise, daß der notwendige Kraftstoffdruck erreicht werden kann.

Ferner ist von der Einspritzpumpen-Zuleitung 22 eine Zweigleitung 96 abgezweigt, durch welche sich ein Teil des im Tank 20 enthaltenen Mitteldruckkraftstoffs als Kühlmittel zum Betrieb des Wärmetauschers 28 abzweigen und wieder dem Ansaugtrakt des Motors rückführen läßt. Der Volumenstrom durch diese Zweigleitung 96 ist durch ein weiteres Magnetventil 98 regelbar. Die Temperatur und somit der Druck unmittelbar vor der Einspritzpumpe 14 lassen sich somit steuern, indem die Kühlleistung des Wärmetauschers 28 entsprechend geregelt wird. Dies kann durch einen entsprechenden Anschluß an die Temperaturfühler 58, 60 bzw. die Steuereinheit 56 geschehen.

Als weiteres zusätzliches Merkmal weist das in Figur 3 gezeigte Einspritzsystem 10 einen Meßfühler 100 in der Rücklaufleitung 46 auf, durch welchen die Möglichkeit gegeben wird, die Leistung der Kraftstoffpumpe 72 und gegebenenfalls die Ventile in den Rücklaufleitungen 32, 46, 78 in Abhängigkeit von einem Signal des Meßfühlers 100 zu steuern. Bei der gemessenen Größe handelt es sich beispielsweise um den Druck oder den Kraftstoff-Massendurchsatz pro Zeiteinheit.

## Patentansprüche

1. Kraftstoff-Einspritzsystem (10) für Brennkraftmaschinen, mit einer Einspritzpumpe (14) zum Einspritzen von flüssigem Kraftstoff in den Brennraum der Brennkraftmaschine, einem Tank (20) zur Speicherung eines Mitteldruckkraftstoffs, dessen Dampfdruck höher ist als der Atmosphärendruck, welcher Tank (20) mit einem Druck beaufschlagt ist, der höher ist als der Dampfdruck des Mitteldruckkraftstoffs, und einer innerhalb des Tanks (20) angeordneten ersten Kraftstoffpumpe (24) zum Fördern von Kraftstoff durch eine Einspritzpumpen-Zuleitung zur Einspritzpumpe (14), **dadurch gekennzeichnet, daß** in der Einspritzpumpen-Zuleitung stromabwärts der ersten Kraftstoffpumpe (24) außerhalb des Tanks (20) eine zweite Kraftstoffpumpe (30) zur zusätzlichen Druckbeaufschlagung des Kraftstoffs angeordnet ist.

2. Kraftstoff-Einspritzsystem gemäß Anspruch 1, **dadurch gekennzeichnet, daß** der Mitteldruckkraftstoff Flüssiggas (LPG) ist.

3. Kraftstoff-Einspritzsystem gemäß Anspruch 1 oder 2, **gekennzeichnet durch** ein Hochdruckventil (16) zur Steuerung des Einspritzdruckes der Einspritzpumpe (14).

4. Kraftstoff-Einspritzsystem gemäß Anspruch 1, 2 oder 3, **gekennzeichnet durch** ein Drucksteuerventil (82) zur Steuerung des Druckes in der Einspritzpumpen-Zuleitung (22).

5. Kraftstoff-Einspritzsystem gemäß einem der vorhergehenden Ansprüche, **dadurch gekennzeichnet, daß** in die Einspritzpumpen-Zuleitung (22) eine Niederdruckkraftstoff-Zuleitung (70) zum Einspeisen eines unter Atmosphärendruck flüssigen Niederdruckkraftstoffs aus einer Niederdruckkraftstoff-Quelle mündet, und daß die Niederdruckkraftstoff-Zuleitung (70) und die Einspritzpumpen-Zuleitung (22) Einrichtungen zum Umschalten zwischen einer Kraftstoffzufuhr aus der Niederdruckkraftstoff-Quelle und einer Kraftstoffzufuhr aus dem Tank (20) umfassen.

6. Kraftstoff-Einspritzsystem gemäß Anspruch 5, **dadurch gekennzeichnet, daß** die Niederdruckkraftstoff-Zuleitung (70) an einem Punkt stromabwärts der zweiten Kraftstoffpumpe (30) in die Einspritzpumpen-Zuleitung (22) mündet.

7. Kraftstoff-Einspritzsystem gemäß Anspruch 5 oder 6, **dadurch gekennzeichnet, daß** die Umschalt-Einrichtungen Magnetventile (26, 76) zum Zu- oder Abschalten der Kraftstoffzufuhr aus dem Tank (20) oder der Niederdruckkraftstoff-Quelle umfassen.

8. Kraftstoff Einspritzsystem gemäß einem der Ansprüche 5 bis 7, **dadurch gekennzeichnet, daß** in der Niederdruckkraftstoff-Zuleitung (70) zumindest eine Niederdruckkraftstoff-Pumpe (72) angeordnet ist.

9. Kraftstoff-Einspritzsystem gemäß einem der Ansprüche 5 bis 8, **dadurch gekennzeichnet, daß** durch eine Fülleitung (36) Mitteldruckkraftstoff in den Tank (20) einleitbar ist.

10. Kraftstoff-Einspritzsystem gemäß einem der vorhergehenden Ansprüche, **gekennzeichnet durch** zumindest eine Rücklauf-Leitung (32, 46, 78) zur Rückführung nicht in den Brennraum eingeleiteten Kraftstoffs in den Tank (20), zur Niederdruckkraftstoff-Quelle oder in die Einspritzpumpen-Zuleitung (22).

11. Kraftstoff-Einspritzsystem gemäß einem der vorhergehenden Ansprüche, **dadurch gekennzeichnet, daß** in der Einspritzpumpen-Zuleitung (22) ein Wärmetauscher (28) zur Kühlung des Kraftstoffs angeordnet ist.

12. Kraftstoff-Einspritzsystem gemäß einem der vorhergehenden Ansprüche, **dadurch gekennzeichnet, daß** der Mitteldruckkraftstoff-Tank (20) beheizbar ist.

13. Kraftstoff-Einspritzsystem gemäß Anspruch 12, **gekennzeichnet durch** zumindest einen Temperaturfühler (58, 60) zur Regelung der Heizung (62) und/oder des Wärmetauschers (28).

14. Kraftstoff-Einspritzsystem gemäß Anspruch 13, **gekennzeichnet durch** jeweils einen Temperaturfühler (58, 60) zur Messung der Temperatur im Tank (20) und in der Einspritzpumpen-Zuleitung (22) und **durch** eine elektrische Steuereinheit (56) zum Vergleich der Meßdaten der Temperaturfühler (58, 60).

15. Kraftstoff-Einspritzsystem gemäß Anspruch 14, **dadurch gekennzeichnet, daß** das Drucksteuerventil (82) eine Pumpe (94) zur Erzeugung eines Drucks umfaßt, welcher sich zum Druck des zugeführten Kraftstoffs auf solche Weise addiert, daß der öffnungsdruck des Drucksteuerventils (82) über dem Dampfdruck des Kraftstoffs liegt.

16. Kraftstoff-Einspritzsystem gemäß einem der vorhergehenden Ansprüche, **gekennzeichnet durch** eine Schmiermittel-Quelle (48) zum Einspeisen eines Schmiermittels in den Tank (20).

17. Kraftstoff-Einspritzsystem gemäß einem der vorhergehenden Ansprüche, **dadurch gekennzeichnet, daß** der Tank (20) wärmeisoliert und/oder schallisoliert ist.
